# EUROPEAN PATENT SPECIFICATION

(11) **EP 4 101 991 B1**
(45) Date of publication and mention of the grant of the patent: **17.09.2025**
(21) Application number: 21780963.1
(22) Date of filing: 31.03.2021
(51) Int. Cl.: E02F 3/43, E02F 9/22, F15B 11/02, F15B 11/024, F15B 11/042, F15B 11/044, F15B 11/08, F15B 11/16

(54) **WORKING MACHINE**
ARBEITSMASCHINE
ENGIN DE CHANTIER

(30) Priority: 02.04.2020 JP 2020066997
(43) Date of publication of application: 14.12.2022
(73) Proprietor: Hitachi Construction Machinery Co., Ltd., Tokyo 110-0015 (JP)
(72) Inventor: KUMAGAI Kento, Tsuchiura-shi, Ibaraki 300-0013 (JP); IMURA Shinya, Tsuchiura-shi, Ibaraki 300-0013 (JP); TSURUGA Yasutaka, Tsuchiura-shi, Ibaraki 300-0013 (JP); CHIBA Takaaki, Tsuchiura-shi, Ibaraki 300-0013 (JP); AMANO Hiroaki, Tsuchiura-shi, Ibaraki 300-0013 (JP); NISHIKAWA Shinji, Tsuchiura-shi, Ibaraki 300-0013 (JP); NARAZAKI Akihiro, Tsuchiura-shi, Ibaraki 300-0013 (JP); SUGIYAMA Genroku, Tsuchiura-shi, Ibaraki 300-0013 (JP); YAMAMOTO Shinjiro, Tsuchiura-shi, Ibaraki 300-0013 (JP)
(74) Representative: Manitz Finsterwald Patent- und Rechtsanwaltspartnerschaft mbB
(86) International application number: PCT/JP2021/013993
(87) International publication number: WO 2021/201158

(56) References cited:
- WO-A1-2018/235779
- JP-A- 2018 003 516
- JP-A- 2018 003 516
- JP-A- H11 101 202
- US-A1- 2020 040 547

## Description

### Technical Field

The present invention relates to a work machine such as a hydraulic excavator.

### Background Art

A work machine such as a hydraulic excavator includes a machine body including a swing structure, and a work device (front implement) attached to the swing structure. The work device includes a boom (front implement member) rotatably connected to the swing structure, an arm (front implement member) rotatably connected to a distal end of the boom, a bucket (front implement member) rotatably connected to a distal end of the arm, a boom cylinder (actuator) that drives the boom, an arm cylinder (actuator) that drives the arm, and a bucket cylinder (actuator) that drives the bucket. In such a work machine, when the boom, the arm, or the bucket is moved singly, the distal end of the bucket moves along an arcuate trajectory. Therefore, when a linear finished surface is to be formed with the use of the distal end of the bucket by an operation of pulling the arm, for example, an operator needs to operate the boom, the arm, and the bucket in a composite manner, and skilled operation techniques are required of the operator.

Accordingly, there is a technology for moving the distal end of the bucket along a design surface (target excavation surface) during the excavation operation (during the operation of the arm or the bucket) by applying a function (machine control) of automatically or semiautomatically controlling the driving of hydraulic actuators by a control system (controller) to excavation work (Patent Document 1).

Meanwhile, some conventional hydraulic excavators include a hydraulic fluid regenerating device that can increase the operation speed of a hydraulic actuator by merging a hydraulic fluid in a tank-side flow passage of the hydraulic actuator into a pump-side flow passage (hydraulic fluid regeneration) (Patent Document 2).

In such a background as described above, in a case where the machine control is applied to a hydraulic excavator including a hydraulic regenerating device capable of increasing the extension and contraction speed of the arm cylinder, when the hydraulic fluid regeneration is performed in the arm cylinder while the distal end of the bucket is moved along the target excavation surface by the machine control, the operation speed of the arm may vary, and the distal end of the bucket may possibly dig in the ground more deeply than the target excavation surface. That is, in a configuration in which the return oil from the actuator is merged into the pump-side flow passage, when a target flow rate for the actuator is set by the machine control (or according to a lever operation made by the operator) and control is performed in such a manner as to make a flow rate of a hydraulic fluid to be supplied from a pump to the actuator coincide with the target flow rate, the flow rate of the hydraulic fluid to be supplied to the actuator becomes higher than the target flow rate, so that accuracy of position control of the actuator cannot be ensured.

In order to solve such a problem, there is a technology for limiting a hydraulic fluid regenerating function by decreasing a regeneration flow rate under conditions where hydraulic regeneration has a large effect when the hydraulic excavator including the hydraulic regenerating device, which is capable of increasing the extension and contraction speed of the cylinder, is operated by the machine control, thereby ensuring accuracy of actuator position control by the machine control (Patent Document 3).

### Prior Art Document

### Patent Documents

Patent Document 1: JP-3056254-B
Patent Document 2: JP-3594680-B
Patent Document 3: JP-2018-3516-A

US 2020/0040547 A1 discloses a hydraulic work machine with a regenerating circuit and a regeneration control device that controls a regeneration state.

### Problem to be Solved by the Invention

However, in a case where the regenerating function is limited when the work machine described in Patent Document 3 is operated by the machine control, though the accuracy of position control of the actuator can be ensured, the operation speed of the actuator cannot be increased, which may result in the decrease in work efficiency. That is, in a configuration in which the accuracy of position control of the actuator is ensured by setting a target flow rate for the actuator by the machine control (or according to a lever operation made by the operator) and making the flow rate of a hydraulic fluid to be supplied from the pump to the actuator coincide with the target flow rate, the operation speed of the actuator cannot be increased by merging the return oil from the actuator into the pump-side flow passage.

### Summary of the Invention

It is the object of the present invention to provide a work machine that can increase the operation speed of an actuator by a regenerating function while ensuring accuracy of position control of the actuator.

### Means for Solving the Problem

The above object is accomplished by the features of claim 1.

A work machine has the features of claim 1. It includes a machine body, a work device attached to the machine body, actuators that drive the machine body or the work device, a hydraulic operating fluid tank, a hydraulic pump that sucks a hydraulic operating fluid from the hydraulic operating fluid tank and supplies the hydraulic operating fluid to a corresponding one of the actuators, flow control valves that are connected in parallel to a delivery line of the hydraulic pump and control a flow of the hydraulic fluid to be supplied from the hydraulic pump to the corresponding one of the actuators, control levers for giving instructions for operation of the actuators, and a controller that controls the flow control valves according to operation instruction amounts from the control levers. The work machine includes a regeneration valve disposed on a hydraulic fluid line that connects a meter-out port and a meter-in port of each of the flow control valves to each other, and a pressure sensor that senses a differential pressure across the regeneration valve. The controller is configured to compute a target actuator flow rate as a target flow rate for each of the actuators on the basis of the operation instruction amounts from the control levers, compute a regeneration flow rate as a flow rate of a hydraulic fluid passing through the regeneration valve on the basis of the differential pressure across the regeneration valve, compute a target actuator supply flow rate by subtracting the regeneration flow rate from the target actuator flow rate, compute a target flow control valve opening amount on the basis of the target actuator supply flow rate, compute a target pump flow rate equal to or more than the sum of a plurality of the target actuator supply flow rates, control the flow control valves according to the target flow control valve opening amount, and control the hydraulic pump according to the target pump flow rate.

According to the present invention configured as described above, the flow control valves and the hydraulic pump are controlled such that the sum of the target flow rate of a hydraulic fluid to be supplied to the actuator from the hydraulic pump (target actuator supply flow rate) and the regeneration flow rate in the actuator are equal to the target flow rate for the actuator (target actuator flow rate). It is thus possible to increase the operation speed of the actuator by a regenerating function while ensuring accuracy of position control of the actuator.

### Advantages of the Invention

The work machine according to the present invention can increase the operation speed of the actuator by a regenerating function while ensuring accuracy of position control of the actuator.

### Brief Description of the Drawings

FIG. 1 is a side view of a hydraulic excavator according to an embodiment of the present invention.
FIG. 2A is a circuit diagram (1/2) of a hydraulic drive system in a first embodiment of the present invention.
FIG. 2B is a circuit diagram (2/2) of the hydraulic drive system in the first embodiment of the present invention.
FIG. 3 is a functional block diagram of a controller in the first embodiment of the present invention.
FIG. 4 is a flowchart illustrating processing related to control of directional control valves by the controller in the first embodiment of the present invention.
FIG. 5 is a flowchart illustrating processing related to control of auxiliary flow control valves by the controller in the first embodiment of the present invention.
FIG. 6 is a flowchart illustrating processing related to control of hydraulic pumps by the controller in the first embodiment of the present invention.
FIG. 7 is a flowchart illustrating processing related to control of a variable restrictor valve by the controller in the first embodiment of the present invention.
FIG. 8A is a circuit diagram (1/2) of a hydraulic drive system in a second embodiment of the present invention.
FIG. 8B is a circuit diagram (2/2) of the hydraulic drive system in the second embodiment of the present invention.
FIG. 9 is a functional block diagram of a controller in the second embodiment of the present invention.
FIG. 10 is a flowchart illustrating processing related to control of directional control valves by the controller in the second embodiment of the present invention.

### Modes for Carrying Out the Invention

Description will hereinafter be made with reference to the drawings by using a hydraulic excavator as an example of a work machine according to an embodiment of the present invention. Incidentally, in the figures, identical members are denoted by the same reference characters, and repeated description thereof will be omitted as appropriate.

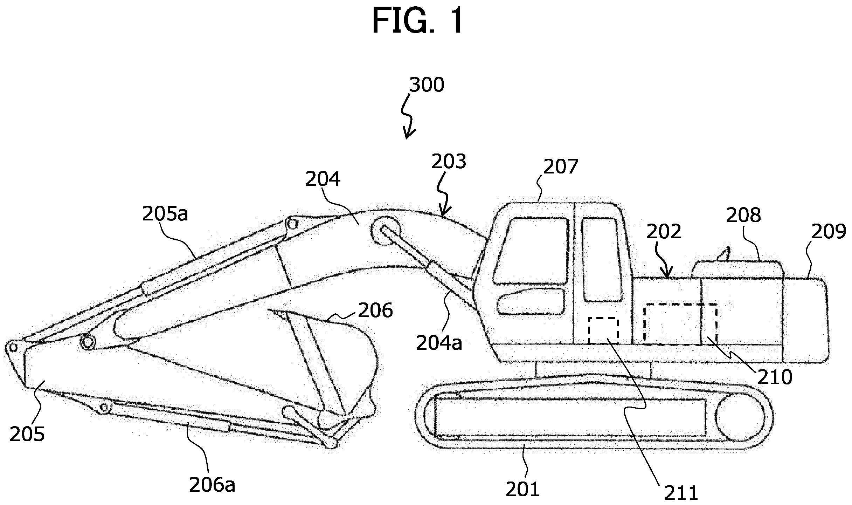

FIG. 1 is a side view of a hydraulic excavator according to the present embodiment.

As illustrated in FIG. 1, a hydraulic excavator 300 includes a track structure 201, a swing structure 202 that is swingably disposed on the track structure 201 and that constitutes a machine body, and a work device 203 that is attached to the swing structure 202 to be rotatable in an upward-downward direction and that performs excavation work on soil or the like. The swing structure 202 is driven by a swing motor 211.

The work device 203 includes a boom 204 attached to the swing structure 202 to be rotatable in the upward-downward direction, an arm 205 attached to a distal end of the boom 204 to be rotatable in the upward-downward direction, and a bucket 206 attached to a distal end of the arm 205 to be rotatable in the upward-downward direction. The boom 204 is driven by a boom cylinder 204a. The arm 205 is driven by an arm cylinder 205a. The bucket 206 is driven by a bucket cylinder 206a.

A cab 207 is provided at a front-side position on the swing structure 202. A counterweight 209 that ensures a weight balance is provided at a rear-side position on the swing structure 202. A machine room 208 that houses an engine, hydraulic pumps, and the like is provided between the cab 207 and the counterweight 209. A control valve 210 is installed in the machine room 208. The control valve 210 controls the flow of a hydraulic operating fluid from the hydraulic pumps to respective actuators.

The hydraulic excavator 300 according to the present embodiment is equipped with a hydraulic drive system to be described in each of the following embodiments.

### First Embodiment

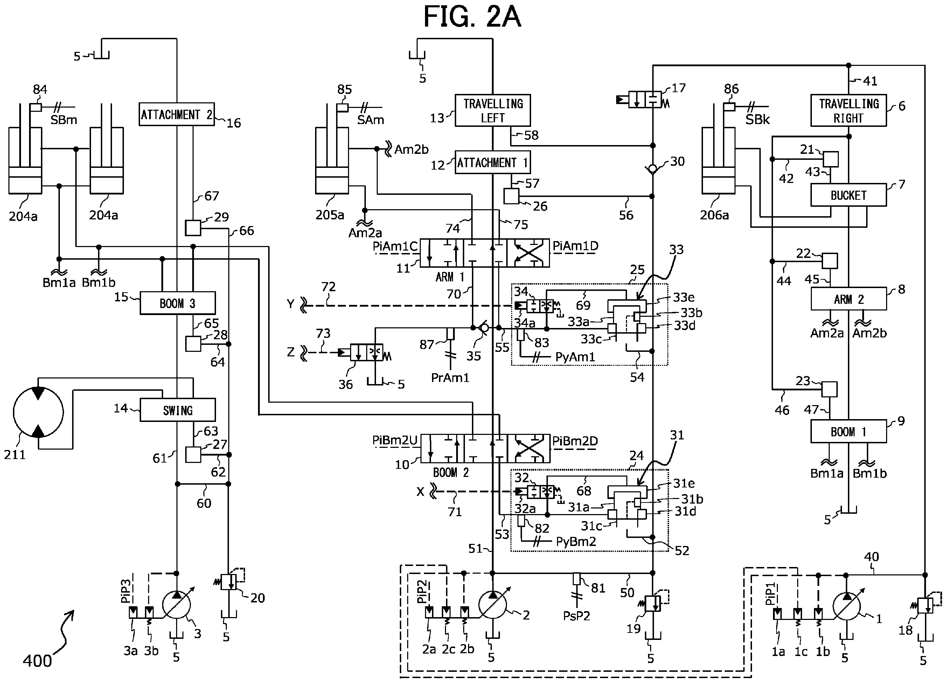

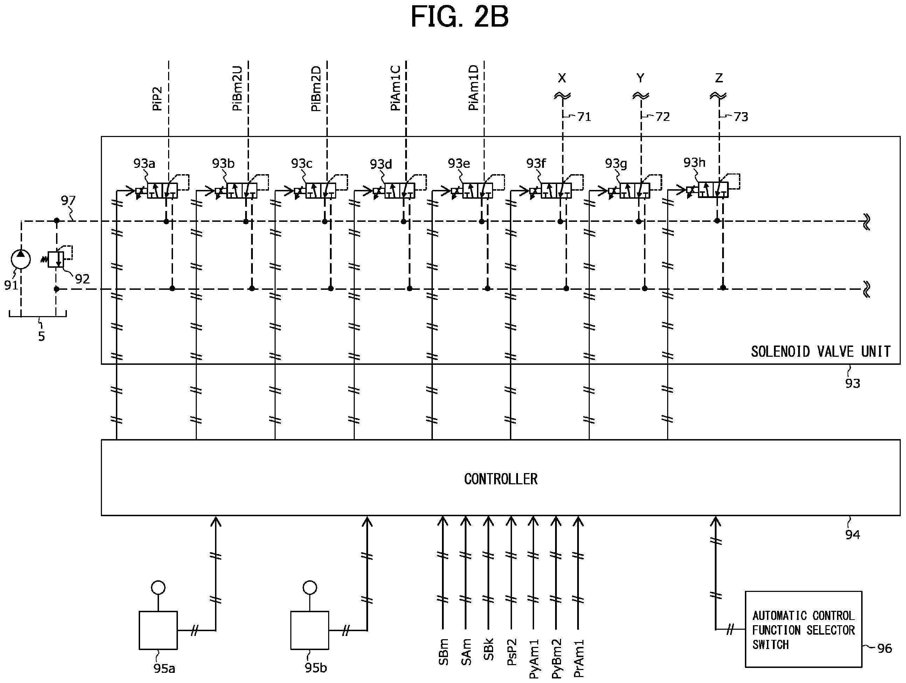

FIG. 2A and FIG. 2B are circuit diagrams of a hydraulic drive system in a first embodiment of the present invention.

### (1) Configuration

A hydraulic drive system 400 in the first embodiment includes three main hydraulic pumps driven by the engine (not illustrated), for example, a first hydraulic pump 1, a second hydraulic pump 2, and a third hydraulic pump 3 which are each constituted by a variable displacement type hydraulic pump. In addition, the hydraulic drive system 400 includes a pilot pump 91 driven by the engine, and also includes a hydraulic operating fluid tank 5 that supplies oil to the hydraulic pumps 1 to 3 and the pilot pump 91.

The tilting angle of the first hydraulic pump 1 is controlled by a regulator attached to the first hydraulic pump 1. The regulator of the first hydraulic pump 1 includes a flow rate control command pressure port 1a, a first hydraulic pump self-pressure port 1b, and a second hydraulic pump self-pressure port 1c. The tilting angle of the second hydraulic pump 2 is controlled by a regulator attached to the second hydraulic pump 2. The regulator of the second hydraulic pump 2 includes a flow rate control command pressure port 2a, a second hydraulic pump self-pressure port 2b, and a first hydraulic pump self-pressure port 2c. The tilting angle of the third hydraulic pump 3 is controlled by a regulator attached to the third hydraulic pump 3. The regulator of the third hydraulic pump 3 includes a flow rate control command pressure port 3a and a third hydraulic pump self-pressure port 3b.

A delivery line 40 of the first hydraulic pump 1 is connected to the hydraulic operating fluid tank 5 via a center bypass hydraulic fluid line 41. On the center bypass hydraulic fluid line 41, a right travelling directional control valve 6, a bucket directional control valve 7, a second arm directional control valve 8, and a first boom directional control valve 9 are arranged in order from an upstream side. The right travelling directional control valve 6 controls the driving of a right travelling motor, not illustrated, of a pair of travelling motors for driving the track structure 201. The bucket directional control valve 7 controls the flow of a hydraulic fluid to be supplied to the bucket cylinder 206a. The second arm directional control valve 8 controls the flow of a hydraulic fluid to be supplied to the arm cylinder 205a. The first boom directional control valve 9 controls the flow of a hydraulic fluid to be supplied to the boom cylinder 204a. Respective supply ports of the bucket directional control valve 7, the second arm directional control valve 8, and the first boom directional control valve 9 are connected in parallel to a part of the center bypass hydraulic fluid line 41 between the right travelling directional control valve 6 and the bucket directional control valve 7 via hydraulic fluid lines 42 and 43, hydraulic fluid lines 44 and 45, and hydraulic fluid lines 46 and 47. In addition, the delivery line 40 is connected to the hydraulic operating fluid tank 5 via a main relief valve 18 in order to protect the circuit from an excessive rise in pressure. The delivery line 40 is provided with a pressure sensor (not illustrated) that senses the pressure of the first hydraulic pump 1.

A delivery line 50 of the second hydraulic pump 2 is connected to the hydraulic operating fluid tank 5 via a center bypass hydraulic fluid line 51 and is also connected to the delivery line 40 of the first hydraulic pump 1 via a confluence valve 17. On the center bypass hydraulic fluid line 51, a second boom directional control valve 10, a first arm directional control valve 11, a first attachment directional control valve 12, and a left travelling directional control valve 13 are arranged in order from an upstream side. The second boom directional control valve 10 controls the flow of a hydraulic fluid to be supplied to the boom cylinder 204a. The first arm directional control valve 11 controls the flow of a hydraulic fluid to be supplied to the arm cylinder 205a. The first attachment directional control valve 12 controls the flow of a hydraulic fluid to be supplied to a first actuator, not illustrated, for driving a first special attachment such as a pulverizer provided in place of the bucket 206. The left travelling directional control valve 13 controls the driving of a left travelling motor, not illustrated, of the pair of travelling motors for driving the track structure 201. Respective supply ports of the second boom directional control valve 10, the first arm directional control valve 11, the first attachment directional control valve 12, and the left travelling directional control valve 13 are connected in parallel to the delivery line 50 of the second hydraulic pump 2 via hydraulic fluid lines 52 and 53, hydraulic fluid lines 54 and 55, hydraulic fluid lines 56 and 57, and a hydraulic fluid line 58. A check valve 30 is provided between a point of connection of the delivery line 50 to the hydraulic fluid line 56 and a point of connection of the delivery line 50 to the hydraulic fluid line 58. The check valve 30 prevents the hydraulic operating fluid supplied to the delivery line 50 via the confluence valve, from flowing into the directional control valves 10 to 12 on the upstream side of the travelling left directional control valve 13. In addition, the delivery line 50 is connected to the hydraulic operating fluid tank 5 via a main relief valve 19 in order to protect the circuit from an excessive rise in pressure. The delivery line 50 is provided with a pressure sensor 81 that senses the pressure of the second hydraulic pump 2.

A meter-out port of the first arm directional control valve 11 is connected to the hydraulic operating fluid tank 5 via a hydraulic fluid line 70. A variable restrictor valve 36 is disposed on the hydraulic fluid line 70. The upstream side of the variable restrictor valve 36 is connected to a hydraulic fluid line 55 via a regeneration valve 35. The regeneration valve 35 allows a hydraulic operating fluid to flow from the hydraulic fluid line 70 (meter-out port of the directional control valve 11) to the hydraulic fluid line 55 (meter-in port of the directional control valve 11), but inhibits the flow of the fluid in an opposite direction. A pressure sensor 87 is provided on the upstream side of the regeneration valve 35. A pressure sensor 83 is provided on the downstream side of the regeneration valve 35.

A delivery line 60 of the third hydraulic pump 3 is connected to the hydraulic operating fluid tank 5 via a center bypass hydraulic fluid line 61. On the center bypass hydraulic fluid line 61, a swing directional control valve 14, a third boom directional control valve 15, and a second attachment directional control valve 16 are arranged in order from an upstream side. The swing directional control valve 14 controls the flow of a hydraulic fluid to be supplied to the swing motor 211. The third boom directional control valve 15 controls the flow of a hydraulic fluid to be supplied to the boom cylinder 204a. When a second special attachment provided with a second actuator is mounted on the hydraulic excavator 300 in addition to the first special attachment or when the second special attachment provided with two actuators, that is, the first actuator and the second actuator, is mounted on the hydraulic excavator 300 in place of a first special actuator, the second attachment directional control valve 16 is used to control the flow of a hydraulic fluid to be supplied to the second actuator. Respective supply ports of the swing directional control valve 14, the third boom directional control valve 15, and the second attachment directional control valve 16 are connected in parallel to the delivery line 60 of the third hydraulic pump 3 via hydraulic fluid lines 62 and 63, hydraulic fluid lines 64 and 65, and hydraulic fluid lines 66 and 67. In addition, the delivery line 60 is connected to the hydraulic operating fluid tank 5 via a main relief valve 20 in order to protect the circuit from an excessive rise in pressure. The delivery line 60 is provided with a pressure sensor (not illustrated) that senses the pressure of the third hydraulic pump 3.

In order to obtain the operation state of the hydraulic excavator 300, the boom cylinder 204a, the arm cylinder 205a, and the bucket cylinder 206a are respectively provided with stroke sensors 84, 85, and 86 that sense a stroke amount. Incidentally, means for obtaining the operation state of the hydraulic excavator 300 includes various sensors such as an inclination sensor, a rotation angle sensor, and an IMU (Inertial Measurement Unit), and is not limited to the above-described stroke sensors.

The hydraulic fluid lines 42 and 43 connected to the bucket directional control valve 7, the hydraulic fluid lines 44 and 45 connected to the second arm directional control valve 8, and the hydraulic fluid lines 46 and 47 connected to the first boom directional control valve 9 are respectively provided with flow rate control valves 21, 22, and 23 that limit the flow rate of the hydraulic fluid supplied from the first hydraulic pump 1 to the directional control valves 7 and 8 at a time of a combined operation. The hydraulic fluid lines 52 and 53 connected to the supply port of the second boom directional control valve 10, the hydraulic fluid lines 54 and 55 connected to the supply port of the first arm directional control valve 11, and the hydraulic fluid lines 56 and 57 connected to the supply port of the first attachment directional control valve 12 are respectively provided with auxiliary flow rate control valves 24, 25, and 26 that limit the flow rate of the hydraulic fluid supplied from the second hydraulic pump 2 to the directional control valves 10 to 12 at the time of the combined operation. The hydraulic fluid lines 62 and 63 connected to the supply port of the swing directional control valve 14, the hydraulic fluid lines 64 and 65 connected to the supply port of the third boom directional control valve 15, and the hydraulic fluid lines 66 and 67 connected to the supply port of the second attachment directional control valve 16 are respectively provided with auxiliary flow rate control valves 27, 28, and 29 that limit the flow rate of the hydraulic fluid supplied from the third hydraulic pump 3 to the directional control valves 14 to 16 at the time of the combined operation.

A delivery port of the pilot pump 91 is connected to the hydraulic operating fluid tank 5 via a pilot relief valve 92 for generation of a pilot primary pressure, and is also connected to one input ports of solenoid proportional valves 93a to 93h included in a solenoid valve unit 93, via a hydraulic fluid line 97. The other input ports of the solenoid proportional valves 93a to 93h are connected to the hydraulic operating fluid tank 5. The solenoid proportional valves 93a to 93h each reduce the pilot primary pressure according to a command signal from a controller 94, and thus generate a pilot command pressure.

An output port of the solenoid proportional valve 93a is connected to the flow rate control command pressure port 2a of the regulator of the second hydraulic pump 2. Output ports of the solenoid proportional valves 93b and 93c are connected to pilot ports of the second boom directional control valve 10. Output ports of the solenoid proportional valves 93d and 93e are connected to pilot ports of the first arm directional control valve 11. An output port of the solenoid proportional valve 93f is connected to a pilot port of the auxiliary flow control valve 24 (pilot port 32a of a pilot variable restrictor 32) via a hydraulic fluid line 71. An output port of the solenoid proportional valve 93g is connected to a pilot port of the auxiliary flow control valve 25 (pilot port 34a of a pilot variable restrictor 34) via a hydraulic fluid line 72. An output port of the solenoid proportional valve 93h is connected to a pilot port of the variable restrictor valve 36 via a hydraulic fluid line 73.

Incidentally, for simplification of the description, the following solenoid proportional valves are not illustrated: solenoid proportional valves for the flow rate control command pressure ports 1a and 3a of the regulators of the first hydraulic pump 1 and the third hydraulic pump 3, solenoid proportional valves for the right travelling directional control valve 6, solenoid proportional valves for the bucket directional control valve 7, solenoid proportional valves for the second arm directional control valve 8, solenoid proportional valves for the first boom directional control valve 9, solenoid proportional valves for the first attachment directional control valve 12, solenoid proportional valves for the left travelling directional control valve 13, solenoid proportional valves for the swing directional control valve 14, solenoid proportional valves for the third boom directional control valve 15, solenoid proportional valves for the second attachment directional control valve 16, and solenoid proportional valves for the auxiliary flow rate control valves 21 to 23 and 26 to 29.

The auxiliary flow rate control valve 24 includes a seat-type main valve 31 that forms an auxiliary variable restrictor, a control variable restrictor 31b that is provided to a valve disc 31a of the main valve 31 and that changes an aperture amount according to an amount of movement of the valve disc 31a, and a pilot variable restrictor 32. A housing including the main valve 31 has a first pressure chamber 31c formed in a connecting portion of the main valve 31 and the hydraulic fluid line 52, a second pressure chamber 31d formed in a connecting portion of the main valve 31 and the hydraulic fluid line 53, and a third pressure chamber 31e formed to communicate with the first pressure chamber 31c via the control variable restrictor 31b. The pilot variable restrictor 32 is disposed on a hydraulic fluid line 68 that connects the third pressure chamber 31e and the hydraulic fluid line 53 to each other. The pilot port 32a of the pilot variable restrictor 32 is connected to the output port of the solenoid proportional valve 93f. A pressure sensor 82 is provided on the hydraulic fluid line 53 that connects the second boom directional control valve 10 and the auxiliary flow control valve 24 (main valve 31) to each other. Incidentally, though partly not illustrated for simplification of the description, the auxiliary flow rate control valves 21 to 29 and peripheral components, piping, and wiring all have same configurations.

The hydraulic drive system 400 has a boom control lever 95a capable of performing switching operation on the first boom directional control valve 9, the second boom directional control valve 10, and the third boom directional control valve 15 and an arm control lever 95b capable of performing switching operation on the first arm directional control valve 11 and the second arm directional control valve 8. Incidentally, for simplification of the description, the following levers are not illustrated: a right travelling control lever that performs switching operation on the right travelling directional control valve 6, a bucket control lever that performs switching operation on the bucket directional control valve 7, a first attachment control lever that performs switching operation on the first attachment directional control valve 12, a left travelling control lever that performs switching operation on the left travelling directional control valve 13, a swing control lever that performs switching operation on the swing directional control valve 14, and a second attachment control lever that performs switching operation on the second attachment directional control valve 16.

The hydraulic drive system 400 includes the controller 94. Input amounts of the control levers 95a and 95b, output values of the pressure sensors 81 to 83 and 87, and output values of the stroke sensors 84 to 86 are inputted to the controller 94. In addition, the controller 94 outputs command signals to the solenoid proportional valves 93a to 93h (including the solenoid proportional valves not illustrated) included in the solenoid valve unit 93.

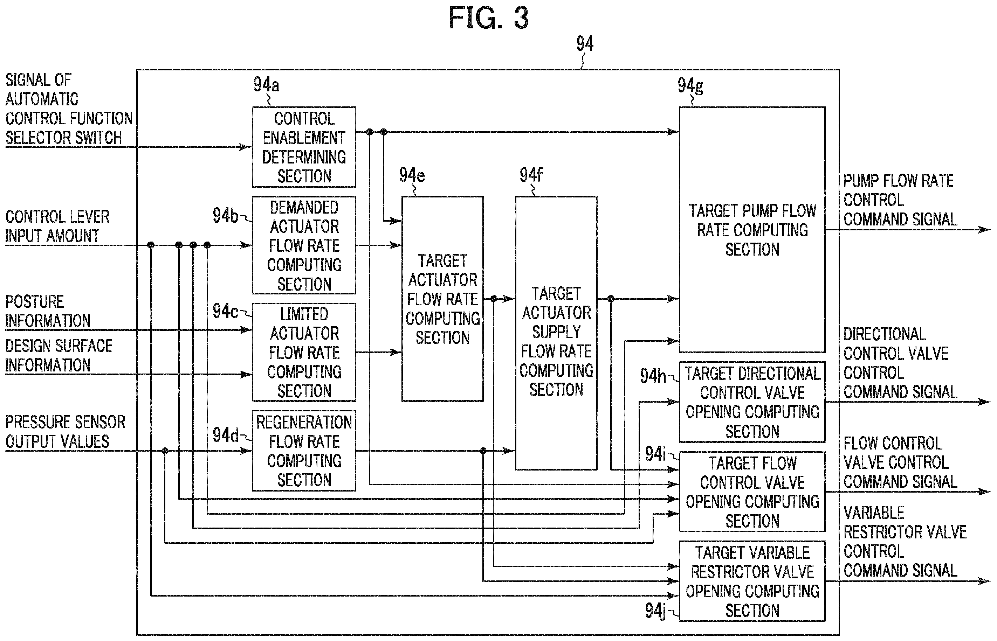

FIG. 3 is a functional block diagram of the controller 94. In FIG. 3, the controller 94 includes a control enablement determining section 94a, a demanded actuator flow rate computing section 94b, a limited actuator flow rate computing section 94c, a regeneration flow rate computing section 94d, a target actuator flow rate computing section 94e, a target actuator supply flow rate computing section 94f, a target pump flow rate computing section 94g, a target directional control valve opening computing section 94h, a target flow control valve opening computing section 94i, and a target variable restrictor valve opening computing section 94j.

The control enablement determining section 94a determines whether an automatic control function is enabled or disabled, on the basis of a signal of an automatic control function selector switch 96. The demanded actuator flow rate computing section 94b computes demanded flow rates for actuators on the basis of the input amounts of the control levers 95a and 95b. The limited actuator flow rate computing section 94c computes, as limited flow rates, actuator flow rates for performing control such that the machine body 202 or the work device 203 does not deviate from a set limited region, on the basis of posture information of the machine body 202 or the work device 203 which is obtained from signals of the stroke sensors 84 to 86 or the like and of design surface information set in advance (including registered target trajectories for the actuators or the like). The regeneration flow rate computing section 94d computes a flow rate (regeneration flow rate) of a hydraulic fluid that passes through the regeneration valve 35, from the output values of the pressure sensors and an opening characteristic of the regeneration valve 35 which is set in advance.

The target actuator flow rate computing section 94e computes target flow rates (target actuator flow rates) of hydraulic fluids to be supplied to the actuators, on the basis of a determination result from the control enablement determining section 94a, the demanded flow rates for the actuators from the demanded actuator flow rate computing section 94b, and the limited flow rates for the actuators from the limited actuator flow rate computing section 94c. The target actuator supply flow rate computing section 94f computes target flow rates (target actuator supply flow rates) of hydraulic fluids to be supplied to the actuators from the hydraulic pumps, on the basis of the target actuator flow rates from the target actuator flow rate computing section 94e and the regeneration flow rate from the regeneration flow rate computing section 94d.

The target pump flow rate computing section 94g computes target flow rates (target pump flow rates) for the hydraulic pumps 1 to 3 on the basis of the determination result from the control enablement determining section 94a, the target actuator supply flow rates from the target actuator supply flow rate computing section 94f, and the control lever input amounts. The target pump flow rate computing section 94g outputs command signals (pump flow rate control command signals) according to the target pump flow rates. The target directional control valve opening computing section 94h computes target opening amounts of the directional control valves 6 to 16 on the basis of the input amounts of the control levers 95a and 95b. The target flow control valve opening computing section 94i computes target opening amounts of the auxiliary flow control valves 21 to 29 on the basis of the determination result from the control enablement determining section 94a, the target actuator supply flow rates from the target actuator supply flow rate computing section 94f, the control lever input amounts, and the pressure sensor output values. The target flow control valve opening computing section 94i outputs command signals (flow control valve control command signals) corresponding to the target opening amounts. The target variable restrictor valve opening computing section 94j computes a target opening amount of the variable restrictor valve 36 on the basis of the target actuator flow rates from the target actuator flow rate computing section 94e, the regeneration flow rate from the regeneration flow rate computing section 94d, and the control lever input amounts. The target variable restrictor valve opening computing section 94j outputs a command signal (variable restrictor valve control command signal) corresponding to the target opening amount.

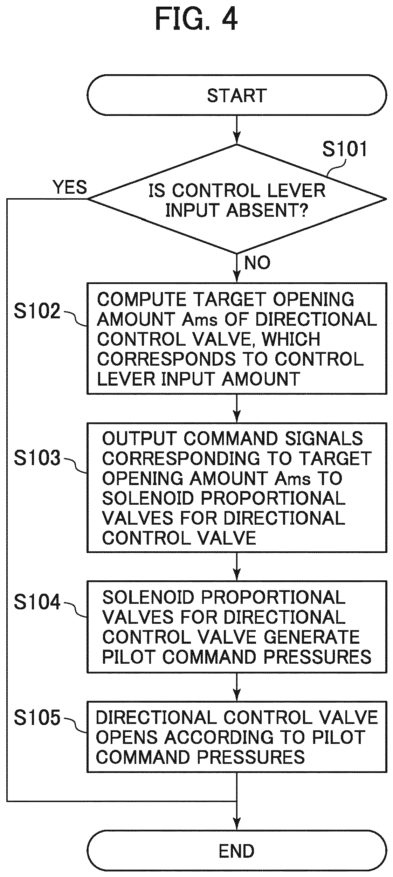

FIG. 4 is a flowchart illustrating processing related to control of the directional control valves 6 to 16 by the controller 94. In the following, only processing related to the second boom directional control valve 10 will be described. Processing related to the other directional control valves is similar to this, and therefore, description thereof will be omitted.

The controller 94 first determines whether or not input of the boom control lever 95a is absent (step S101). When the controller 94 determines in step S101 that there is no input of the boom control lever 95a (YES), the controller 94 ends the flow. When the controller 94 determines in step S101 that there is an input of the boom control lever 95a (NO), the target directional control valve opening computing section 94h of the controller 94 computes a target opening amount Ams of the directional control valve 10 which corresponds to the input amount of the boom control lever 95a (step S102).

Following step S102, the controller 94 outputs command signals corresponding to the target opening amount Ams from the controller 94 to the solenoid proportional valves 93b and 93c for the directional control valve 10 (S103), makes the solenoid proportional valves 93b and 93c generate pilot command pressures of the directional control valve 10 (S104), makes the directional control valve 10 open according to the pilot command pressures (S105), and then ends the flow.

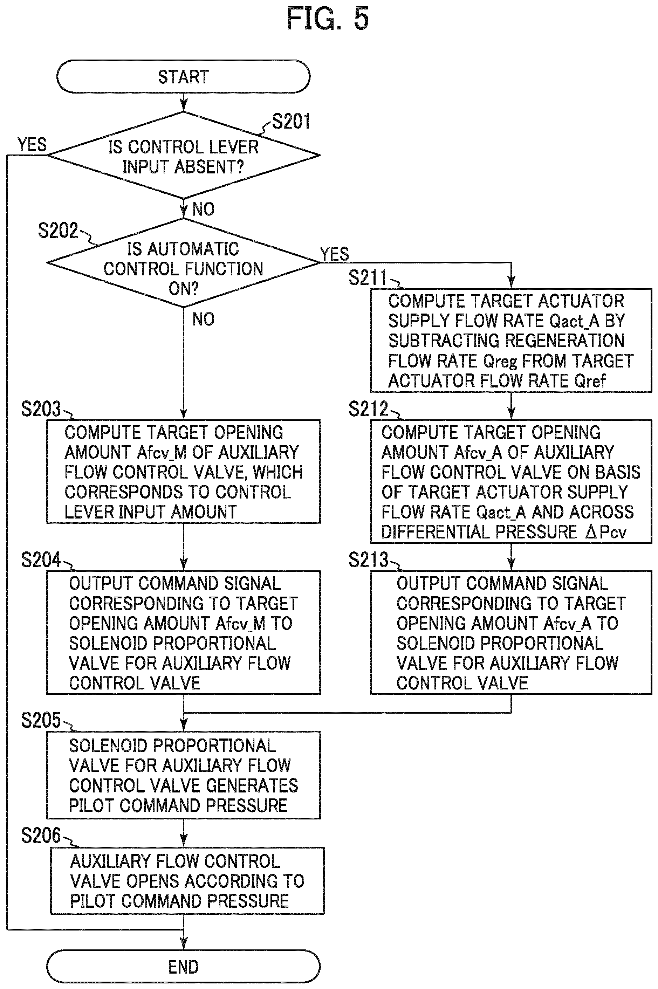

FIG. 5 is a flowchart illustrating processing related to control of the auxiliary flow control valves 21 to 29 by the controller 94. In the following, only processing related to control of the auxiliary flow control valve 24 corresponding to the second boom directional control valve 10 will be described. Processing related to control of the other auxiliary flow control valves is similar to this, and therefore, description thereof will be omitted.

The controller 94 first determines whether or not input of the boom control lever 95a is absent (step S201). When the controller 94 determines in step S201 that input of the boom control lever 95a is absent (YES), the controller 94 ends the flow. When the controller 94 determines in step S201 that there is an input of the boom control lever 95a (NO), the controller 94 determines whether or not the automatic control function (machine control) is enabled (step S202).

When the controller 94 determines in step S202 that the automatic control function is disabled (NO), the target flow control valve opening computing section 94i of the controller 94 computes a target opening amount Afcv_M of the auxiliary flow control valve 24 (main valve 31) which corresponds to the input amount of the boom control lever 95a (step S203), outputs a command signal corresponding to the target opening amount Afcv_M to the solenoid proportional valve 93f for the auxiliary flow control valve 24 (S204), makes the solenoid proportional valve 93f generate a pilot command pressure of the auxiliary flow control valve 24 (main valve 31) (S205), makes the auxiliary flow control valve 24 (main valve 31) open according to the pilot command pressure (S206), and then ends the flow.

When the controller 94 determines in step S202 that the automatic control function is enabled (YES), the target actuator supply flow rate computing section 94f of the controller 94 computes a target actuator supply flow rate Qact_A by subtracting a regeneration flow rate Qreg from a target actuator flow rate Qref (step S211). The target flow control valve opening computing section 94i of the controller 94 computes a target opening amount Afcv_A of the auxiliary flow control valve 24 on the basis of the target actuator supply flow rate Qact_A and a differential pressure ΔPfcv across the auxiliary flow control valve 24 (main valve 31) (step S212), outputs a command signal corresponding to the target opening amount Afcv_A to the solenoid proportional valve 93f for the auxiliary flow control valve 24 (step S213), performs the processing of steps S205 and S206, and then ends the flow.

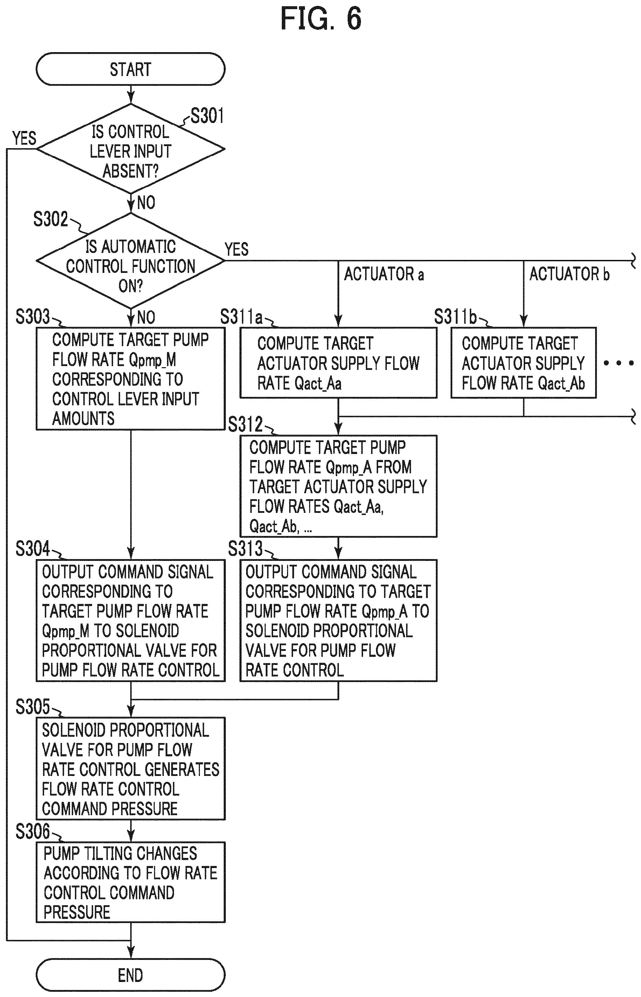

FIG. 6 is a flowchart illustrating processing related to control of the hydraulic pumps 1 to 3 by the controller 94. In the following, only processing related to control of the second hydraulic pump 2 will be described. Processing related to control of the other hydraulic pumps is similar to this, and therefore, description thereof will be omitted.

The controller 94 first determines whether or not input of the control levers 95a and 95b is absent (step S301). When the controller 94 determines in step S301 that input of the control levers 95a and 95b is absent (YES), the controller 94 ends the flow. When the controller 94 determines in step S301 that there is an input of the control levers 95a and 95b (NO), the controller 94 determines whether or not the automatic control function is enabled (step S302).

When the controller 94 determines in step S302 that the automatic control function is disabled (NO), the target pump flow rate computing section 94g of the controller 94 computes a target pump flow rate Qpmp_M for the hydraulic pump 2 which corresponds to the input amounts of the control levers 95a and 95b (step S303), outputs a command signal corresponding to the target pump flow rate Qpmp_M to the solenoid proportional valve 93a for flow rate control on the hydraulic pump 2 (S304), makes the solenoid proportional valve 93a generate a flow rate control command pressure PiP2 of the hydraulic pump 2 (S305), makes the tilting of the second hydraulic pump 2 changed according to the flow rate control command pressure PiP2 (S306), and then ends the flow.

When the controller 94 determines in step S302 that the automatic control function is enabled (YES), the target actuator supply flow rate computing section 94f of the controller 94 computes target actuator supply flow rates Qact_Aa, Qact_Ab, ... (steps S311a, S311b, ...). Here, the target actuator supply flow rate Qact_Aa is a target flow rate of a hydraulic fluid to be supplied to the boom cylinder 204a from the hydraulic pump 2, and the target actuator supply flow rate Qact_Ab is a target flow rate of a hydraulic fluid to be supplied to the arm cylinder 205a from the hydraulic pump 2.

Following steps S311a, S311b, ..., the target pump flow rate computing section 94g of the controller 94 computes a sum of the target supply flow rates Qact_Aa, Qact_Ab, ... for the respective actuators as a target pump flow rate Qpmp_A (step S312), outputs a command signal corresponding to the target pump flow rate Qpmp_A to the solenoid proportional valve 93a for flow rate control on the hydraulic pump 2 (S313), performs the processing of steps S305 and S306, and then ends the flow. Here, the target pump flow rate Qpmp_A is set as appropriate by a designer, and does not need to precisely coincide with the sum of the target flow rates for the respective actuators. A bleed-off flow rate, a drain flow rate, or the like may be added to the target pump flow rate Qpmp_A.

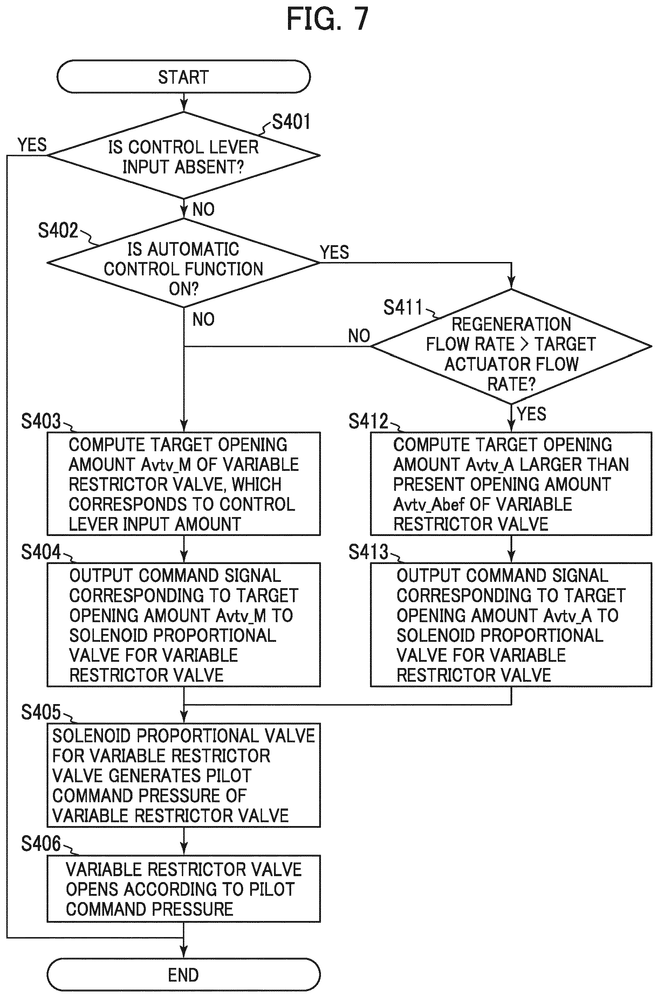

FIG. 7 is a flowchart illustrating processing related to control of the variable restrictor valve 36 by the controller 94. In the following, only processing related to control of the variable restrictor valve 36 corresponding to the first arm directional control valve 11 will be described. Processing related to control of the other variable restrictor valves (not illustrated) is similar to this, and therefore, description thereof will be omitted.

The controller 94 first determines whether or not input of the arm control lever 95b is absent (step S401). When the controller 94 determines in step S401 that there is no input of the arm control lever 95b (YES), the controller 94 ends the flow. When the controller 94 determines in step S401 that there is an input of the arm control lever 95b (NO), the controller 94 determines whether or not the automatic control function is enabled (step S402).

When the controller 94 determines in step S402 that the automatic control function is disabled (NO), the target variable restrictor valve opening computing section 94j of the controller 94 computes a target opening amount Avtv_M of the variable restrictor valve 36 which corresponds to the input value of the arm control lever 95b (step S403), outputs a command signal corresponding to the target opening amount Avtv_M to the solenoid proportional valve 93h for the variable restrictor valve 36 (S404), makes the solenoid proportional valve 93h generate a pilot command pressure of the variable restrictor valve 36 (S405), makes the variable restrictor valve 36 open according to the pilot command pressure (S406), and then ends the flow. The regeneration flow rate Qreg consequently changes according to the input amount of the arm control lever 95b.

When the controller 94 determines in step S402 that the automatic control function is enabled (YES), the target variable restrictor valve opening computing section 94j of the controller 94 determines whether or not the regeneration flow rate Qreg is higher than the target actuator flow rate Qref (step S411). When the controller 94 determines in step S411 that the regeneration flow rate Qreg is equal to or less than the target actuator flow rate Qref (NO), the controller 94 performs the processing from step S403 on down. The regeneration flow rate Qreg consequently changes according to the input amount of the arm control lever 95b unless the regeneration flow rate Qreg exceeds the target actuator flow rate Qref.

When the controller 94 determines in step S411 that the regeneration flow rate Qreg is higher than the target actuator flow rate Qref (YES), the target variable restrictor valve opening computing section 94j of the controller 94 computes a target opening amount Avtv_A larger than a present opening amount Avtv_Abef of the variable restrictor valve 36 (step S412), outputs a command signal corresponding to the target opening amount Avtv_A to the solenoid proportional valve 93h for the variable restrictor valve 36 (S413), performs the processing of steps S405 and S405, and then ends the flow. The regeneration flow rate Qreg is consequently limited to the target actuator flow rate Qref or lower.

### (2) Operation

Operation of the hydraulic drive system 400 will be described by focusing on parts related to the second hydraulic pump 2. Operation of parts related to the other hydraulic pumps is similar to this, and therefore, description thereof will be omitted.

### (2-1) Operation in a state in which the automatic control function is disabled

Description will be made regarding the operation of the respective components when the arm control lever 95b is operated in a state in which the automatic control function is disabled.

### · Directional Control Valve

The controller 94 computes the target opening amount Ams of the first arm directional control valve 11 which corresponds to the input amount of the arm control lever 95b, and outputs command signals corresponding to the target opening amount Ams to the solenoid proportional valves 93d and 93e. The solenoid proportional valves 93d and 93e generate pilot command pressures PiAmlU and PiAmlD according to the command signals, and thus control the opening amount of the first arm directional control valve 11.

### · Auxiliary Flow Control Valve

The controller 94 computes the target opening amount Afcv_M of the auxiliary flow control valve 25 (main valve 33) which corresponds to the input amount of the arm control lever 95b, and outputs a command signal corresponding to the target opening amount Afcv_M to the solenoid proportional valve 93g. The solenoid proportional valve 93g generates a pilot command pressure according to the command signal, and thus controls the opening amount of the auxiliary flow control valve 25 (main valve 33). In the present operation example, control is performed in such a manner as to maximize the opening amount of the auxiliary flow control valve 25 (main valve 33) (fully open the auxiliary flow control valve 25 (main valve 33)).

### · Hydraulic Pump

The controller 94 computes the target flow rate Qpmp_M for the second hydraulic pump 2 which corresponds to the input amount of the arm control lever 95b, and outputs a command signal corresponding to the target flow rate Qpmp_M to the solenoid proportional valve 93a. The solenoid proportional valve 93a generates the flow rate control command pressure PiP2 according to the command signal, and thus controls the flow rate in the second hydraulic pump 2.

### · Variable Restrictor Valve

The controller 94 computes the target opening amount Avtv_M of the variable restrictor valve 36 which corresponds to the input amount of the arm control lever 95b, and outputs a command signal corresponding to the target opening amount Avtv_M to the solenoid proportional valve 93h. The solenoid proportional valve 93h generates a pilot command pressure according to the command signal, and thus controls the opening amount of the variable restrictor valve 36.

### (2-2) Operation in a state in which the automatic control function is enabled

Description will be made regarding the operation of the respective components when the arm control lever 95b is operated in a state in which the automatic control function is enabled.

### · Directional Control Valve

The controller 94 computes the target opening amount Ams of the first arm directional control valve 11 which corresponds to the input amount of the arm control lever 95b, and outputs command signals corresponding to the target opening amount Ams to the solenoid proportional valves 93d and 93e. The solenoid proportional valves 93d and 93e generate the pilot command pressures PiAmlU and PiAmlD according to the command signals, and thus control the opening amount of the first arm directional control valve 11.

### · Auxiliary Flow Control Valve

The controller 94 computes the target actuator flow rate Qref and the regeneration flow rate Qreg on the basis of the input amount of the arm control lever 95b, the posture information of the machine body 202 or the work device 203, the design surface information, and the pressure sensor output values, computes the target actuator supply flow rate Qact_A by subtracting the regeneration flow rate Qreg from the target actuator flow rate Qref, computes the target opening amount Afcv_A of the auxiliary flow control valve 25 (main valve 33) on the basis of the target actuator supply flow rate Qact_A and the differential pressure ΔPfcv across the auxiliary flow control valve 25 (main valve 33), and outputs a command signal corresponding to the target opening amount Afcv_A to the solenoid proportional valve 93g. The solenoid proportional valve 93g generates a pilot command pressure according to the command signal, and thus controls the opening amount of the auxiliary flow control valve 25 (main valve 33).

### · Hydraulic Pump

The controller 94 computes the target pump flow rate Qpmp_A by summing the target supply flow rates Qact_A for the respective actuators, and outputs a command signal corresponding to the target pump flow rate Qpmp_A to the solenoid proportional valve 93a. The solenoid proportional valve 93a generates the flow rate control command pressure PiP2 according to the command signal, and thus controls the flow rate in the second hydraulic pump 2. Incidentally, the present operation is a single operation of the arm cylinder 205a, and therefore, the target pump flow rate Qpmp_A is equal to the target supply flow rate Qact_A for the arm cylinder 205a.

### · Variable Restrictor Valve

The controller 94 determines whether or not the regeneration flow rate Qreg is higher than the target actuator flow rate Qref. When a result of the determination indicates YES, the controller 94 computes the target opening amount Avtv_M of the variable restrictor valve 36 which corresponds to the input amount of the arm control lever 95b, and outputs a command signal corresponding to the target opening amount Avtv_M to the solenoid proportional valve 93h. When the determination result indicates NO, the controller 94 computes the target opening amount Avtv_A larger than the present opening amount Avtv_Abef of the variable restrictor valve 36, and outputs a command signal corresponding to the target opening amount Avtv_A to the solenoid proportional valve 93h. The solenoid proportional valve 93h generates a pilot command pressure according to the command signal, and thus controls the opening amount of the variable restrictor valve 36.

### (3) Effects

In the present embodiment, a work machine 300 includes a machine body 202, a work device 203 attached to the machine body 202, actuators 204a, 205a, 206a, and 211 that drive the machine body 202 or the work device 203, a hydraulic operating fluid tank 5, hydraulic pumps 1 to 3 that suck hydraulic operating fluids from the hydraulic operating fluid tank 5 and that supply the hydraulic operating fluids to the actuators 204a, 205a, 206a, and 211, flow control valves 6 to 16 and 21 to 29 that are connected in parallel to delivery lines 40, 50, and 60 of the hydraulic pumps 1 to 3 and that control the flows of hydraulic fluids to be supplied from the hydraulic pumps 1 to 3 to the actuators 204a, 205a, 206a, and 211, control levers 95a and 95b for giving instructions for operation of the actuators 204a, 205a, 206a, and 211, and a controller 94 that controls the flow control valves 6 to 16 and 21 to 29 according to operation instruction amounts from the control levers 95a and 95b. The work machine 300 includes a regeneration valve 35 disposed on a hydraulic fluid line that connects a meter-out port and a meter-in port of the flow control valve 11 to each other, and pressure sensors 87 and 83 that sense a differential pressure across the regeneration valve 35. The controller 94 computes a target actuator flow rate Qref as a target flow rates for each of the actuators 204a, 205a, 206a, and 211 on the basis of the operation instruction amounts from the control levers 95a and 95b, computes a regeneration flow rate Qreg as a flow rate of a hydraulic fluid passing through the regeneration valve 35 on the basis of the differential pressure across the regeneration valve 35, computes a target actuator supply flow rate Qact_A by subtracting the regeneration flow rate Qreg from the target actuator flow rate Qref, computes a target flow control valve opening amount Afcv_A on the basis of the target actuator supply flow rate Qact_A, computes a target pump flow rate Qpmp_A equal to or more than the sum of the target actuator supply flow rates Qact_A, controls the flow control valves 21 to 29 according to the target flow control valve opening amount Afcv_A, and controls the hydraulic pumps 1 to 3 according to the target pump flow rate Qpmp_A.

In addition, the flow control valves 6 to 16 and 21 to 29 include directional control valves 6 to 16 that control directions of hydraulic fluids to be supplied from the hydraulic pumps 1 to 3 to the actuators 204a, 205a, 206a, and 211 and auxiliary flow control valves 21 to 29 that limit flow rates of hydraulic fluids to be supplied from the hydraulic pumps 1 to 3 to meter-in ports of the directional control valves 6 to 16, and the regeneration valve 35 is disposed on the hydraulic fluid line that connects the meter-out port and the meter-in port of the directional control valve 11 to each other.

According to the present embodiment configured as described above, the flow control valves 21 to 29 and the hydraulic pumps 1 to 3 are controlled such that sums of the target flow rates of the hydraulic fluids to be supplied to the actuators from the hydraulic pumps 1 to 3 (target actuator supply flow rates Qact_A) and the regeneration flow rates Qreg for the actuators are equal to the target flow rates for the actuators (target actuator flow rates Qref). It is thus possible to increase the operation speed of the actuators by a regenerating function while ensuring accuracy of position control of the actuators. Work efficiency of the work machine 100 can thus be improved. Further, when a regeneration flow rate becomes excessive depending on the pressure state of the actuator, a fine adjustment can be made by, for example, increasing the opening amount of the variable restrictor valve 36 and thus reducing the regeneration flow rate. It is thus possible to set and change operability of the actuators easily.

In addition, the work machine 300 according to the present embodiment includes a variable restrictor valve 36 disposed on a hydraulic fluid line 70 that connects the meter-out port of the flow control valve 11 and the hydraulic operating fluid tank 5 to each other, and when the regeneration flow rate Qreg exceeds the target actuator flow rate Qref, the controller 94 increases an opening amount of the variable restrictor valve 36 until the regeneration flow rate Qreg becomes equal to or lower than the target actuator flow rate Qref. It is thus possible to maximize the regeneration flow rate Qreg while maintaining the flow rate of a hydraulic fluid supplied to the actuator at the target flow rate Qact_A.

In addition, the work machine 300 according to the present embodiment includes an automatic control function selector switch 96 that gives an instruction for enabling or disabling an automatic control function of the machine body 202 or the work device 203, and when the automatic control function selector switch 96 gives an instruction for disabling the automatic control function, the controller 94 computes target flow control valve opening amounts Afcv_M and a target pump flow rate Qpmp_M on the basis of the operation instruction amounts from the control levers 95a and 95b. It is thus possible to increase the operation speed of the actuators by the regenerating function as in a conventional work machine when the automatic control function is disabled.

### Second Embodiment

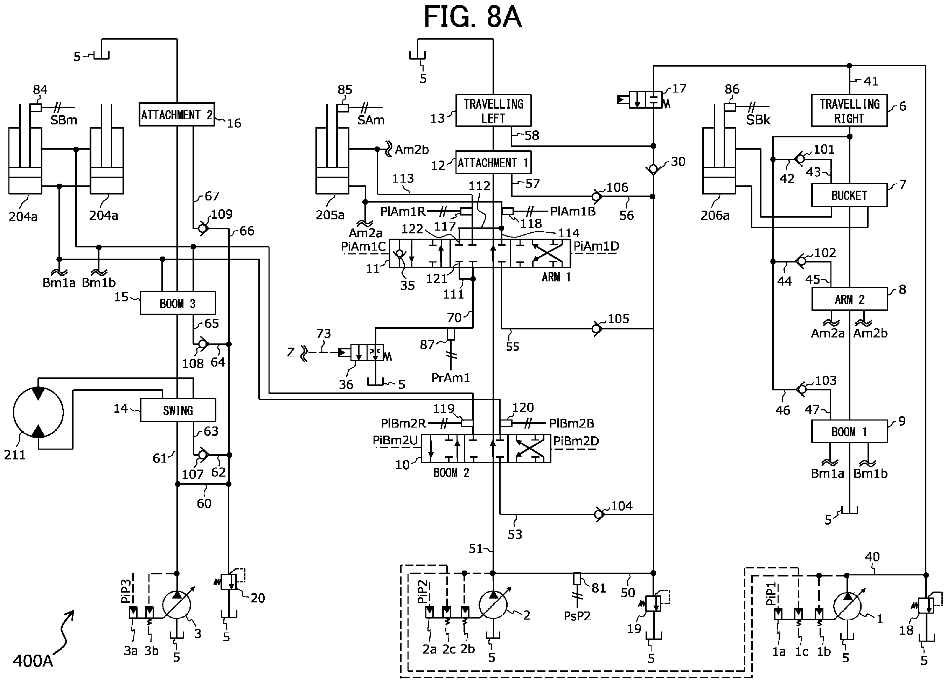

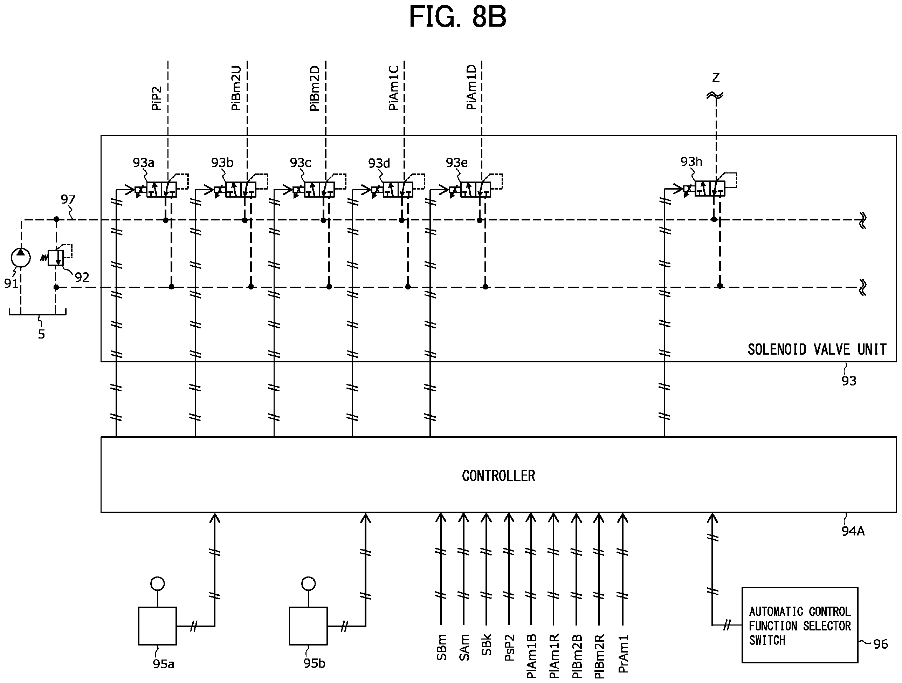

FIG. 8A and FIG. 8B are circuit diagrams of a hydraulic drive system in a second embodiment of the present invention.

### (1) Configuration

A configuration of a hydraulic drive system 400A in the present embodiment is substantially similar to the hydraulic drive system 400 (illustrated in FIG. 2A and FIG. 2B) in the first embodiment, but is different in the following respects.

The hydraulic drive system 400A in the present embodiment includes, in place of the auxiliary flow control valves 21 to 29 in the first embodiment, check valves 101 to 109 that prevent hydraulic fluids from reversely flowing from actuator sides to the delivery lines 40, 50, and 60.

The regeneration valve 35 in the present embodiment is disposed within a spool of the first arm directional control valve 11. The first arm directional control valve 11 is provided with regeneration ports 121 and 122. The regeneration port 121 is connected with a hydraulic fluid line 111 branched from the hydraulic fluid line 70 connected to the meter-out port of the first arm directional control valve 11. The regeneration port 122 is connected with a hydraulic fluid line 112 branched from a hydraulic fluid line 114 that connects the first arm directional control valve 11 and the bottom side of the arm cylinder 205a to each other. When the spool of the first arm directional control valve 11 is operated to be switched to a crowding direction (right direction in the figure), the hydraulic fluid line 111 is connected to the upstream side of the regeneration valve 35, and the hydraulic fluid line 112 is connected to the downstream side of the regeneration valve 35. The hydraulic operating fluid discharged from the rod side of the arm cylinder 205a is thus regenerated on the bottom side of the arm cylinder 205a. The hydraulic fluid lines 113 and 114 that connect the first arm directional control valve 11 and the arm cylinder 205a to each other are provided with pressure sensors 117 and 118, respectively. Incidentally, though partly not illustrated for simplification of the description, the directional control valves 6 to 16 and peripheral components, piping, and wiring all have same configurations.

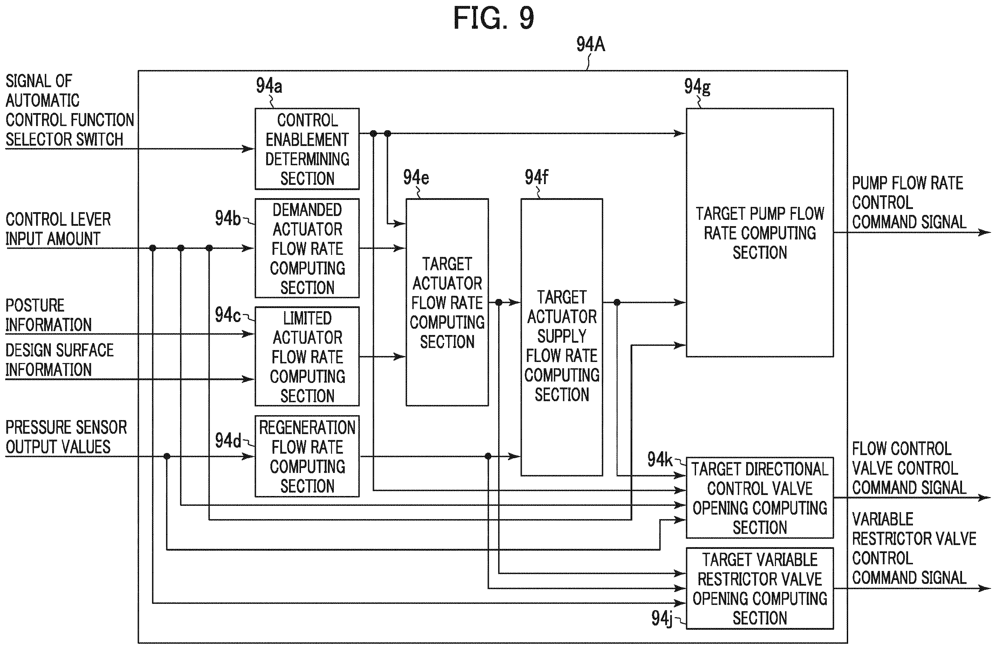

FIG. 9 is a functional block diagram of a controller 94A in the present embodiment. In FIG. 9, the controller 94A in the present embodiment includes a target directional control valve opening computing section 94k in place of the target directional control valve opening computing section 94h and the target flow control valve opening computing section 94i (illustrated in FIG. 3) in the first embodiment. The target directional control valve opening computing section 94k computes target opening amounts of the directional control valves on the basis of the determination result from the control enablement determining section 94a, the target actuator supply flow rates from the target actuator supply flow rate computing section 94f, the control lever input amounts, and the pressure sensor output values.

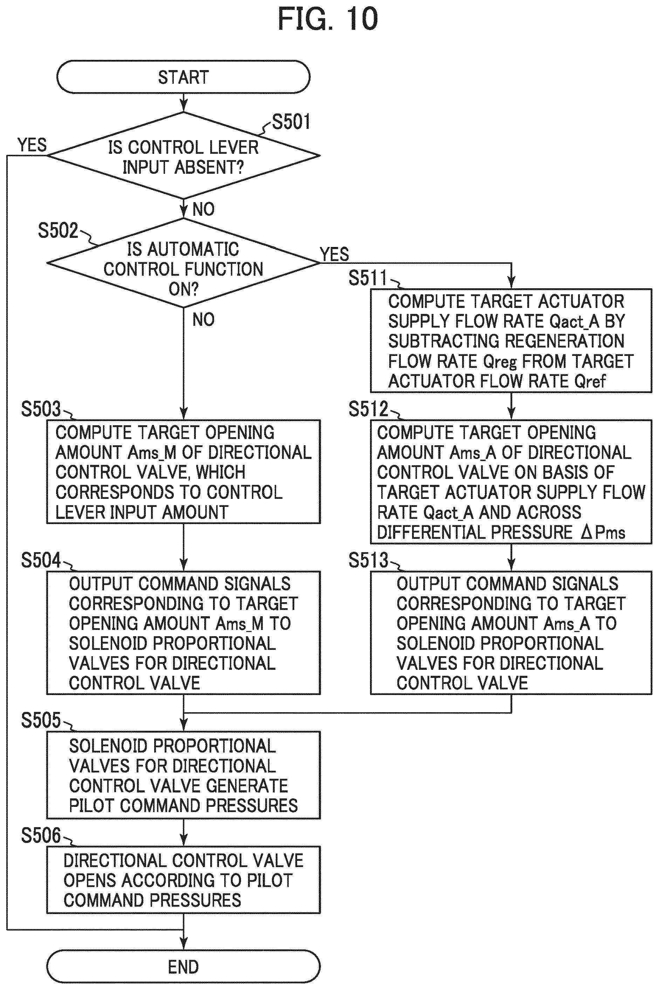

FIG. 10 is a flowchart illustrating processing related to control of the directional control valves 6 to 16 by the controller 94A. In the following, only processing related to control of the second boom directional control valve 10 will be described. Processing related to control of the other directional control valves is similar to this, and therefore, description thereof will be omitted.

The controller 94A first determines whether or not input of the boom control lever 95a is absent (step S501). When the controller 94A determines in step S501 that there is no input of the boom control lever 95a (YES), the controller 94A ends the flow. When the controller 94A determines in step S501 that there is an input of the boom control lever 95a (NO), the controller 94A determines whether or not the automatic control function (machine control) is enabled (step S502).

When the controller 94A determines in step S502 that the automatic control function is disabled (NO), the target directional control valve opening computing section 94k of the controller 94A computes a target opening amount Ams_M of the directional control valve 10 which corresponds to the input amount of the boom control lever 95a (step S503), outputs command signals corresponding to the target opening amount Ams_M to the solenoid proportional valves 93b and 93c for the directional control valve 10 (S504), makes the solenoid proportional valves 93b and 93c generate pilot command pressures of the directional control valve 10 (S505), makes the directional control valve 10 open according to the pilot command pressures (S506), and then ends the flow.

When the controller 94A determines in step S502 that the automatic control function is enabled (YES), the target actuator supply flow rate computing section 94f of the controller 94A computes the target actuator supply flow rate Qact_A by subtracting the regeneration flow rate Qreg from the target actuator flow rate Qref (step S511). The target directional control valve opening computing section 94k of the controller 94A computes a target opening amount Ams_A of the directional control valve 10 on the basis of the target actuator supply flow rate Qact_A and a differential pressure ΔPms across the directional control valve 10 (step S512), outputs command signals corresponding to the target opening amount Ams_A to the solenoid proportional valves 93b and 93c for the directional control valve 10 (step S513), performs the processing of steps S505 and S506, and then ends the flow.

### (2) Operation

Operation of the hydraulic drive system 400A in the second embodiment will be described by focusing on parts related to the second hydraulic pump 2. Operation of parts related to the other hydraulic pumps is similar to this, and therefore, description thereof will be omitted.

### (2-1) Operation in a state in which the automatic control function is disabled

Description will be made regarding the operation of the respective components when the arm control lever 95b is operated in a state in which the automatic control function is disabled.

### · Directional Control Valve

The controller 94A computes the target opening amount Ams_M of the first arm directional control valve 11 which corresponds to the input amount of the arm control lever 95b, and outputs command signals corresponding to the target opening amount Ams_M to the solenoid proportional valves 93d and 93e. The solenoid proportional valves 93d and 93e generate the pilot command pressures PiAmlU and PiAmlD according to the command signals, and thus control the opening amount of the first arm directional control valve 11.

### · Hydraulic Pump

Control similar to that in the first embodiment is performed, and therefore, description thereof will be omitted.

### · Variable Restrictor Valve

Control similar to that in the first embodiment is performed, and therefore, description thereof will be omitted.

### (2-2) Operation in a state in which the automatic control function is enabled

Description will be made regarding the operation of the respective components when the arm control lever 95b is operated in a state in which the automatic control function is enabled.

### · Directional Control Valve

The controller 94A computes the target actuator flow rate Qref and the regeneration flow rate Qreg on the basis of the input amount of the arm control lever 95b, the posture information of the machine body 202 or the work device 203, the design surface information, and the pressure sensor output values, computes the target actuator supply flow rate Qact_A by subtracting the regeneration flow rate Qreg from the target actuator flow rate Qref, computes the target opening amount Ams_A of the directional control valve 11 on the basis of the target actuator supply flow rate Qact_A and the differential pressure ΔPms across the directional control valve 11, and outputs command signals corresponding to the target opening amount Ams_A to the solenoid proportional valves 93d and 93e. The solenoid proportional valves 93d and 93e generate the pilot command pressures PiAmlU and PiAmlD according to the command signals, and thus control the opening amount of the directional control valve 11.

### · Hydraulic Pump

Control similar to that in the first embodiment is performed, and therefore, description thereof will be omitted.

### · Variable Restrictor Valve

Control similar to that in the first embodiment is performed, and therefore, description thereof will be omitted.

### (3) Effects

In the second embodiment, the flow control valves 6 to 16 that control the flows of the hydraulic fluids to be supplied from the hydraulic pumps 1 to 3 to the actuators 204a, 205a, 206a, and 211 are directional control valves that control directions and flow rates of the hydraulic fluids to be supplied from the hydraulic pumps 1 to 3 to the actuators 204a, 205a, 206a, and 211, and a regeneration valve 115 is disposed within a spool of the directional control valve 11.

According to the second embodiment configured as described above, with a configuration simpler than that of the first embodiment, the operation speed of the actuators can be increased by the regenerating function while accuracy of position control of the actuators is ensured. It is thus possible to improve work efficiency of the work machine 100 while reducing cost.

The embodiments of the present invention have been described above in detail. However, the present invention is not limited to the foregoing embodiments, and includes various modifications. For example, the foregoing embodiments have been described in detail in order to describe the present invention in an easily understandable manner, and are not necessarily limited to the embodiments including all of the described configurations. In addition, it is possible to add a part of a configuration of a certain embodiment to a configuration of another embodiment, and it is possible to omit a part of a configuration of a certain embodiment or replace a part of a configuration of a certain embodiment with a part of another embodiment.

### Description of Reference Characters

1: First hydraulic pump
1a: Flow rate control command pressure port (regulator)
1b: First hydraulic pump self-pressure port (regulator)
1c: Second hydraulic pump self-pressure port (regulator)
2: Second hydraulic pump
2a: Flow rate control command pressure port (regulator)
2b: Second hydraulic pump self-pressure port (regulator)
2c: First hydraulic pump self-pressure port (regulator)
3: Third hydraulic pump
3a: Flow rate control command pressure port (regulator)
3b: Third hydraulic pump self-pressure port (regulator)
5: Hydraulic operating fluid tank
6: Right travelling directional control valve (flow control valve)
7: Bucket directional control valve (flow control valve)
8: Second arm directional control valve (flow control valve)
9: First boom directional control valve (flow control valve)
10: Second boom directional control valve (flow control valve)
11: First arm directional control valve (flow control valve)
12: First attachment directional control valve (flow control valve)
13: Left travelling directional control valve (flow control valve)
14: Swing directional control valve (flow control valve)
15: Third boom directional control valve (flow control valve)
16: Second attachment directional control valve (flow control valve)
17: Confluence valve
18 to 20: Main relief valve
21 to 29: Auxiliary flow control valve (flow control valve)
30: Check valve
31: Main valve
31a: Valve disc
31b: Control variable restrictor
31c: First pressure chamber
31d: Second pressure chamber
31e: Third pressure chamber
32: Pilot variable restrictor
32a: Pilot port
33: Main valve
33a: Valve disc
33b: Control variable restrictor
33c: First pressure chamber
33d: Second pressure chamber
33e: Third pressure chamber
34: Pilot variable restrictor
34a: Pilot port
35: Regeneration valve
36: Variable restrictor valve
41: Center bypass hydraulic fluid line
42 to 47: Hydraulic fluid line
51: Center bypass hydraulic fluid line
52 to 58: Hydraulic fluid line
61: Center bypass hydraulic fluid line
62 to 75: Hydraulic fluid line
81 to 83: Pressure sensor
84 to 86: Stroke sensor
87: Pressure sensor
91: Pilot pump
92: Pilot relief valve
93: Solenoid valve unit
93a to 93h: Solenoid proportional valve
94, 94A: Controller
94a: Control enablement determining section
94b: Demanded actuator flow rate computing section
94c: Limited actuator flow rate computing section
94d: Regeneration flow rate computing section
94e: Target actuator flow rate computing section
94f: Target actuator supply flow rate computing section
94g: Target pump flow rate computing section
94h: Target directional control valve opening computing section
94i: Target flow control valve opening computing section
94j: Target variable restrictor valve opening computing section
94k: Target directional control valve opening computing section
95a: Boom control lever
95b: Arm control lever
96: Automatic control function selector switch
97: Hydraulic fluid line
101 to 109: Check valve
111 to 114: Hydraulic fluid line
117 to 120: Pressure sensor
121, 122: Regeneration port
201: Track structure
202: Swing structure (machine body)
203: Work device
204: Boom
204a: Boom cylinder (actuator)
205: Arm
205a: Arm cylinder (actuator)
206: Bucket
206a: Bucket cylinder (actuator)
207: Cab
208: Machine room
209: Counterweight
210: Control valve
211: Swing motor (actuator)
300: Hydraulic excavator (work machine)
400, 400A: Hydraulic drive system

## Claims

1. A work machine comprising:
a machine body (202);
a work device (203) attached to the machine body (202);
actuators (204a, 205a, 206a, 211) that drive the machine body (202) or the work device (203);
a hydraulic operating fluid tank (5);
a hydraulic pump (1 to 3) that sucks a hydraulic operating fluid from the hydraulic operating fluid tank (5) and supplies the hydraulic operating fluid to a corresponding one of the actuators (204a, 205a, 206a, 211);
flow control valves (6 to 16, 21 to 29) that are connected in parallel to a delivery line of the hydraulic pump (1 to 3) and control a flow of the hydraulic fluid to be supplied from the hydraulic pump (1 to 3) to the corresponding one of the actuators (204a, 205a, 206a, 211);
control levers (95a, 95b) for giving instructions for operation of the actuators (204a, 205a, 206a, 211);
a controller (94) that controls the flow control valves (6 to 16, 21 to 29) according to operation instruction amounts from the control levers (95a, 95b); and
a regeneration valve (35) disposed on a hydraulic fluid line that connects a meter-out port and a meter-in port of each of the flow control valves (6 to 16, 21 to 29) to each other,
**characterized in that**
the work machine includes a pressure sensor (83, 87) that senses a differential pressure across the regeneration valve (35), and
the controller (94) is configured to
compute a target actuator flow rate as a target flow rate for each of the actuators (204a, 205a, 206a, 211) on a basis of the operation instruction amounts from the control levers (95a, 95b),
compute a regeneration flow rate as a flow rate of a hydraulic fluid passing through the regeneration valve (35) on a basis of the differential pressure across the regeneration valve (35),
compute a target actuator supply flow rate by subtracting the regeneration flow rate from the target actuator flow rate,
compute a target flow control valve opening amount on a basis of the target actuator supply flow rate,
compute a target pump flow rate equal to or more than a sum of a plurality of the target actuator supply flow rates,
control the flow control valves (6 to 16, 21 to 29) according to the target flow control valve opening amount, and
control the hydraulic pump (1 to 3) according to the target pump flow rate.

2. The work machine according to claim 1, wherein
the flow control valves (6 to 16, 21 to 29) include directional control valves (6 to 16) that control a direction of the hydraulic fluid to be supplied from the hydraulic pump (1 to 3) to the corresponding one of the actuators (204a, 205a, 206a, 211) and auxiliary flow control valves (21 to 29) that limit a flow rate of a hydraulic fluid to be supplied from the hydraulic pump (1 to 3) to meter-in ports of the directional control valves (6 to 16), and
the regeneration valve (35) is disposed on a hydraulic fluid line that connects a meter-out port and a meter-in port of each of the directional control valves (6 to 16) to each other.

3. The work machine according to claim 1, wherein
the flow control valves (6 to 16) are directional control valves (6 to 16) that control a direction and a flow rate of the hydraulic fluid to be supplied from the hydraulic pump (1 to 3) to the corresponding one of the actuators (204a, 205a, 206a, 211), and
the regeneration valve (35) is disposed within a spool of each of the directional control valves (6 to 16).

4. The work machine according to claim 1, including:
a variable restrictor valve (36) disposed on a hydraulic fluid line (70) that connects the meter-out port of each of the flow control valves (6 to 16) and the hydraulic operating fluid tank (5) to each other, wherein
the controller (94) is configured to, in a case where the regeneration flow rate exceeds the target actuator flow rate, increase an opening amount of the variable restrictor valve (36) until the regeneration flow rate becomes equal to or lower than the target actuator flow rate.

5. The work machine according to claim 1, including:
an automatic control function selector switch (96) that gives an instruction for enabling or disabling an automatic control function of the machine body (202) or the work device (203), wherein
the controller (94) is configured to, in a case where the automatic control function selector switch (96) gives an instruction for disabling the automatic control function, compute the target flow control valve opening amount and the target pump flow rate on the basis of the operation instruction amounts from the control levers (95a, 95b).

## Patentansprüche

1. Arbeitsmaschine, umfassend:
einen Maschinenkörper (202);
eine Arbeitsvorrichtung (203), die an dem Maschinenkörper (202) angebracht ist;
Aktoren (204a, 205a, 206a, 211), die den Maschinenkörper (202) oder die Arbeitsvorrichtung (203) antreiben;
einen Hydraulikbetriebsfluidtank (5);
eine Hydraulikpumpe (1 bis 3), die ein Hydraulikbetriebsfluid aus dem Hydraulikbetriebsfluidtank (5) ansaugt und das Hydraulikbetriebsfluid einem entsprechenden der Aktoren (204a, 205a, 206a, 211) zuführt;
Durchflusssteuerventile (6 bis 16, 21 bis 29), die parallel mit einer Förderleitung der Hydraulikpumpe (1 bis 3) verbunden sind und einen Durchfluss des Hydraulikfluids steuern, das von der Hydraulikpumpe (1 bis 3) dem entsprechenden der Aktoren (204a, 205a, 206a, 211) zuzuführen ist;
Steuerhebel (95a, 95b) zum Geben von Anweisungen für den Betrieb der Aktoren (204a, 205a, 206a, 211);
eine Steuereinheit (94), die das Durchflusssteuerventil (6 bis 16, 21 bis 29) gemäß Betriebsanweisungsbeträgen von den Steuerhebeln (95a, 95b) steuert; und
ein Regenerationsventil (35), das auf einer Hydraulikfluidleitung angeordnet ist, die einen Auslassanschluss und einen Einlassanschluss jedes der Durchflusssteuerventile (6 bis 16, 21 bis 29) miteinander verbindet,
**dadurch gekennzeichnet, dass**
die Arbeitsmaschine einen Drucksensor (83, 87) umfasst, der einen Differenzdruck über das Regenerationsventil (35) erfasst, und
die Steuereinheit (94) konfiguriert ist, um
eine Soll-Aktordurchflussrate als eine Soll-Durchflussrate für jeden der Aktoren (204a, 205a, 206a, 211) auf einer Basis der Betriebsanweisungsbeträge von den Steuerhebeln (95a, 95b) zu berechnen,
eine Regenerationsdurchflussrate als eine Durchflussrate eines Hydraulikfluids, das durch das Regenerationsventil (35) strömt, auf einer Basis des Differenzdrucks über das Regenerationsventil (35) zu berechnen,
eine Soll-Aktorzufuhrdurchflussrate durch Subtrahieren der Regenerationsdurchflussrate von der Soll-Aktordurchflussrate zu berechnen,
einen Soll-Durchflusssteuerventilöffnungsbetrag auf einer Basis der Soll-Aktorzufuhrdurchflussrate zu berechnen,
eine Soll-Pumpendurchflussrate gleich oder größer als eine Summe einer Vielzahl der Soll-Aktorzufuhrdurchflussraten zu berechnen,
die Durchflusssteuerventile (6 bis 16, 21 bis 29) gemäß dem Soll-Durchflusssteuerventil-Öffnungsbetrag zu steuern, und
die Hydraulikpumpe (1 bis 3) gemäß der Soll-Pumpendurchflussrate zu steuern.

2. Arbeitsmaschine nach Anspruch 1, wobei
die Durchflusssteuerventile (6 bis 16, 21 bis 29) Richtungssteuerventile (6 bis 16), die eine Richtung des Hydraulikfluids steuern, das von der Hydraulikpumpe (1 bis 3) dem entsprechenden der Aktoren (204a, 205a, 206a, 211) zuzuführen ist, und Hilfsdurchflusssteuerventile (21 bis 29), die eine Durchflussrate eines Hydraulikfluids begrenzen, das von der Hydraulikpumpe (1 bis 3) Einlassanschlüssen der Richtungssteuerventile (6 bis 16) zuzuführen ist, enthalten, und
das Regenerationsventil (35) an einer Hydraulikfluidleitung angeordnet ist, die einen Auslassanschluss und einen Einlassanschluss jedes der Richtungssteuerventile (6 bis 16) miteinander verbindet.

3. Arbeitsmaschine nach Anspruch 1, wobei
die Durchflusssteuerventile (6 bis 16) Richtungssteuerventile (6 bis 16) sind, die eine Richtung und eine Durchflussrate des Hydraulikfluids steuern, das von der Hydraulikpumpe (1 bis 3) dem entsprechenden der Aktoren (204a, 205a, 206a, 211) zuzuführen ist, und
das Regenerationsventil (35) innerhalb einer Trommel jedes der Richtungssteuerventile (6 bis 16) angeordnet ist.

4. Arbeitsmaschine nach Anspruch 1, umfassend:
ein variables Drosselventil (36), das an einer Hydraulikfluidleitung (70) angeordnet ist, die den Auslassanschluss jedes der Durchflusssteuerventile (6 bis 16) und den Hydraulikbetriebsfluidtank (5) miteinander verbindet, wobei die Steuereinheit (94) konfiguriert ist, um in einem Fall, in dem die Regenerationsdurchflussrate die Soll-Aktordurchflussrate überschreitet, einen Öffnungsbetrag des variablen Drosselventils (36) zu erhöhen, bis die Regenerationsdurchflussrate gleich oder niedriger als die Soll-Aktordurchflussrate wird.

5. Arbeitsmaschine nach Anspruch 1, umfassend:
einen automatischen Steuerfunktions-Wahlschalter (96), der eine Anweisung zum Aktivieren oder Deaktivieren einer automatischen Steuerfunktion des Maschinenkörpers (202) oder der Arbeitsvorrichtung (203) gibt, wobei die Steuereinheit (94) konfiguriert ist, um in einem Fall, in dem der automatische Steuerfunktions-Wahlschalter (96) eine Anweisung zum Deaktivieren der automatischen Steuerfunktion gibt, den Soll-Durchflusssteuerventil-Öffnungsbetrag und die Soll-Pumpendurchflussrate auf der Grundlage der Betriebsanweisungsbeträge von den Steuerhebeln (95a, 95b) zu berechnen.

## Revendications

1. Machine de chantier comprenant :
un corps de machine (202) ;
un dispositif de travail (203) attaché au corps de machine (202) ;
des actionneurs (204a, 205a, 206a, 211) qui entraînent le corps de machine (202) ou le dispositif de travail (203) ;
un réservoir à fluide d'actionnement hydraulique (5) ;
une pompe hydraulique (1 à 3) qui aspire un fluide d'actionnement hydraulique depuis le réservoir à fluide d'actionnement hydraulique (5) et qui alimente le fluide d'actionnement hydraulique à un actionneur correspondant parmi les actionneurs (204a, 205a, 206a, 211) ;
des vannes de commande d'écoulement (6 à 16, 21 à 29) qui sont connectées en parallèle à une conduite de distribution de la pompe hydraulique (1 à 3) et qui commandent un écoulement du fluide hydraulique devant être alimenté depuis la pompe hydraulique (1 à 3) jusqu'à l'actionneur correspondant parmi les actionneurs (204a, 205a, 206a, 211) ;
des leviers de commande (95a, 95b) destinés à donner des instructions d'actionnement des actionneurs (204a, 205a, 206a, 211) ;
un contrôleur (94) qui commande les vannes de commande d'écoulement (6 à 16, 21 à 29) en fonction des amplitudes d'instructions d'actionnement provenant des leviers de commande (95a, 95b) ; et
une vanne de régénération (35) disposée sur une conduite de fluide hydraulique qui connecte l'un à l'autre un orifice de dosage sortant et un orifice de dosage entrant de chacune des vannes de commande d'écoulement (6 à 16, 21 à 29),
**caractérisée en ce que**
la machine de chantier inclut un capteur de pression (83, 87) qui détecte une pression différentielle à travers la vanne de régénération (35), et
le contrôleur (94) est configuré pour
calculer un débit d'actionneur cible à titre de débit cible pour chacun des actionneurs (204a, 205a, 206a, 211) sur la base des amplitudes d'instructions d'actionnement provenant des leviers de commande (95a, 95b),
calculer un débit de régénération à titre de débit d'un fluide hydraulique passant à travers la vanne de régénération (35) sur la base de la pression différentielle à travers la vanne de régénération (35),
calculer un débit d'alimentation d'actionneur cible en soustrayant le débit de régénération du débit d'actionneur cible,
calculer une amplitude d'ouverture de vanne de commande d'écoulement cible sur la base du débit d'alimentation d'actionneur cible,
calculer un débit de pompe cible égal ou supérieur à une somme d'une pluralité de débits d'alimentation d'actionneur cible,
commander les vannes de commande d'écoulement (6 à 16, 21 à 29) en fonction de l'amplitude d'ouverture de vanne de commande d'écoulement cible, et
commander la pompe hydraulique (1 à 3) en fonction du débit de pompe cible.

2. Machine de chantier selon la revendication 1, dans laquelle
les vannes de commande d'écoulement (6 à 16, 21 à 29) incluent des vannes de commande directionnelle (6 à 16) qui commandent une direction du fluide hydraulique devant être alimenté depuis la pompe hydraulique (1 à 3) jusqu'à l'actionneur correspondant parmi les actionneurs (204a, 205a, 206a, 211) et des vannes de commande d'écoulement auxiliaire (21 à 29) qui limitent un débit d'un fluide hydraulique devant être alimenté depuis la pompe hydraulique (1 à 3) jusqu'à des orifices de dosage entrant des vannes de commande directionnelle (6 à 16), et
la vanne de régénération (35) est disposée sur une conduite de fluide hydraulique qui connecte l'un à l'autre un orifice de dosage sortant et un orifice de dosage entrant de chacune des vannes de commande directionnelle (6 à 16).

3. Machine de chantier selon la revendication 1, dans laquelle
les vannes de commande d'écoulement (6 à 16) sont des vannes de commande directionnelle (6 à 16) qui commandent une direction et un débit du fluide hydraulique devant être alimenté depuis la pompe hydraulique (1 à 3) jusqu'à l'actionneur correspondant parmi les actionneurs (204a, 205a, 206a, 211), et
la vanne de régénération (35) est disposée à l'intérieur d'un tiroir de chacune des vannes de commande directionnelle (6 à 16).

4. Machine de chantier selon la revendication 1, incluant :
une vanne à restriction variable (36) disposée sur une conduite de fluide hydraulique (70) qui connecte l'un à l'autre l'orifice de dosage sortant de chacune des vannes de commande d'écoulement (6 à 16) et le réservoir à fluide d'actionnement hydraulique (5), dans laquelle
le contrôleur (94) est configuré pour, dans un cas où le débit de régénération dépasse le débit d'actionneur cible, augmenter une amplitude d'ouverture de la vanne à restriction variable (36) jusqu'à ce que le débit de régénération devienne égal ou inférieur au débit d'actionneur cible.

5. Machine de chantier selon la revendication 1, incluant :
un commutateur de sélection de fonction de commande automatique (96) qui donne une instruction d'activation ou de désactivation d'une fonction de commande automatique du corps de machine (202) ou du dispositif de travail (203), dans laquelle
le contrôleur (94) est configuré pour, dans un cas où le commutateur de sélection de fonction de commande automatique (96) donne une instruction de désactivation de la fonction de commande automatique, calculer l'amplitude d'ouverture de vanne de commande d'écoulement cible et le débit de pompe cible sur la base des amplitudes d'instructions d'actionnement provenant des leviers de commande (95a, 95b).
